# EUROPEAN PATENT SPECIFICATION

(11) **EP 1 000 343 B1**
(45) Date of publication and mention of the grant of the patent: **24.09.2003**
(21) Application number: 98933119.4
(22) Date of filing: 02.07.1998
(51) Int. Cl.: G01N 21/53

(54) **ALLERGEN DETECTOR SYSTEM AND METHOD**
SYSTEM UND VERFAHREN ZUM NACHWEIS VON ALLERGENEN
SYSTEME ET PROCEDE DE DETECTION D'ALLERGENES

(30) Priority: 03.07.1997 US 887533
(43) Date of publication of application: 17.05.2000
(73) Proprietor: HAMBURGER, Robert N, La Jolla, CA 92037 (US)
(72) Inventor: HAMBURGER, Robert, N., La Jolla, CA 92037 (US); WANG, Ruibo, Goleta, CA 93117 (US); JIANG, Jien-Ping, Tucson, AZ 85719 (US)
(74) Representative: Wilson, Nicholas Martin
(86) International application number: US9813837
(87) International publication number: WO99001748

(56) References cited:
- WO-A-90/10282
- WO-A-98/02731
- GB-A- 2 044 445
- US-A- 4 830 494
- US-A- 5 315 115
- US-A- 5 428 964
- DRISCOLL W.G. ET AL: 'Handbook of Optics', 1978, MCGRAW-HILL BOOK COMPANY, NEW YORK
- 'The Focal Encyclopedia of Photography', 1969, FOCAL PRESS, LONDON
- O'SHEA D.C.: 'Elements of Modern Optical Design', 1985, JOHN WILEY & SONS, NEW YORK

## Description

### BACKGROUND OF THE INVENTION

The present invention is directed to an apparatus and a method for detecting airborne allergen particles and for providing an alarm or operating a filtering system if the detected amount of allergen particles is above a predetermined level.

Many individuals suffer from allergies to airborne particles such as dust, pollen and the like which are often present in the environmental air breathed by the individual. The majority of particulates to which many individuals are sensitive are typically in the 5 to 50 µm (micron) range. The presence of such particles in air breathed by sensitive or allergic individuals may give rise to symptoms such as asthma, coughing, sneezing, as well as skin rashes and anaphylaxis. Knowledge or warning of the presence of high levels of allergenic particles in the environmental air is helpful to such individuals, potentially enabling them to take medication, leave the area, or activate allergen removing filters, before the onset of serious symptoms.

In U.S. Patent No. 5,001,463 of Hamburger an allergen particulate detecting apparatus is described in which air is blown through a passageway in which an allergen particle sensor is mounted for trapping allergen-sized particles. The output signal of the sensor is dependent on the amount of trapped particles, and an alarm is activated if the signal is above a predetermined level.

Document US-A-5 315 115 discloses an apparatus comprising the features defined in the preamble of present claims 1 and 10.

### SUMMARY OF THE INVENTION

It is an object of the present invention to provide a new and improved allergen detection system and method, which is achieved with an apparatus according to claims 1 and 10, and a method according to claim 1, respectively. Additional features are set out in the dependent claims. A control circuit may be connected to the detector for generating an alarm output signal if the detector output is above a predetermined level.

The alarm output signal may be used to activate an audible or visual alarm device, or to turn on a filtration and ventilation system including HEPA (RTM) or allergen particle filters. The filtration system may be turned off as soon as the detected allergen particles have returned to a safe level. The apparatus may be relatively small, and may be conveniently designed for wall mounting.

The beam blocking assembly preferably comprises a disc of light blocking material centered on the optical axis and of predetermined diameter to block all unscattered light and light scattered at angles below a predetermined minimum angle which is scattered by particles larger than 50 µm, and an annular ring of light blocking material having an inner diameter corresponding to the predetermined maximum scattering angle, such that light scattered by particles smaller than 5µm is blocked. The focusing lens is arranged to focus the light beam onto the central, beam blocking disc.

In a preferred embodiment of the invention, the light source is a light emitting diode- (LED). By focusing the output beam of the LED onto the beam blocking disc, the need to collimate the beam is avoided. Since an LED has a more diffuse emitting region than other lasers, it is more difficult to collimate, requiring a complex optical arrangement. The focusing lens and beam blocker arrangement allow an inexpensive LED to be used as the light source, without requiring any complex collimator arrangement. The diameter of the beam blocker disc is sufficient to block all unscattered light from the LED. In other words, it has a diameter slightly larger than the focused spot diameter of the focusing lens. If no allergen-size particles are present, all light will be blocked by the beam blocker.

This system and method readily discriminates between allergen-size particles in the 5 to 50 micron range and larger, non-allergenic particles so as to produce an accurate indication of the allergen particle levels in a room or enclosed area. Preferably, the level at which the alarm signal is produced is adjustable. The apparatus can be readily connected to turn on auxiliary air cleaning appliances or filters such as HEPA (RTM) filters.

### BRIEF DESCRIPTION OF THE DRAWINGS

The present invention will be better understood from the following detailed description of some preferred embodiments of the invention, taken in conjunction with the accompanying drawings, in which like reference numerals refer to like parts, and in which:
Figure 1 is a block diagram of an allergen particle detector apparatus according to a first embodiment of the invention;
Figure 2 is a block diagram illustrating a modified output control circuit;
Figure 3 is a block diagram of an allergen particle detector according to a second embodiment of the invention; and
Figure 4 is a block diagram similar to Figure 3 illustrating a modification.

### DESCRIPTION OF THE PREFERRED EMBODIMENTS

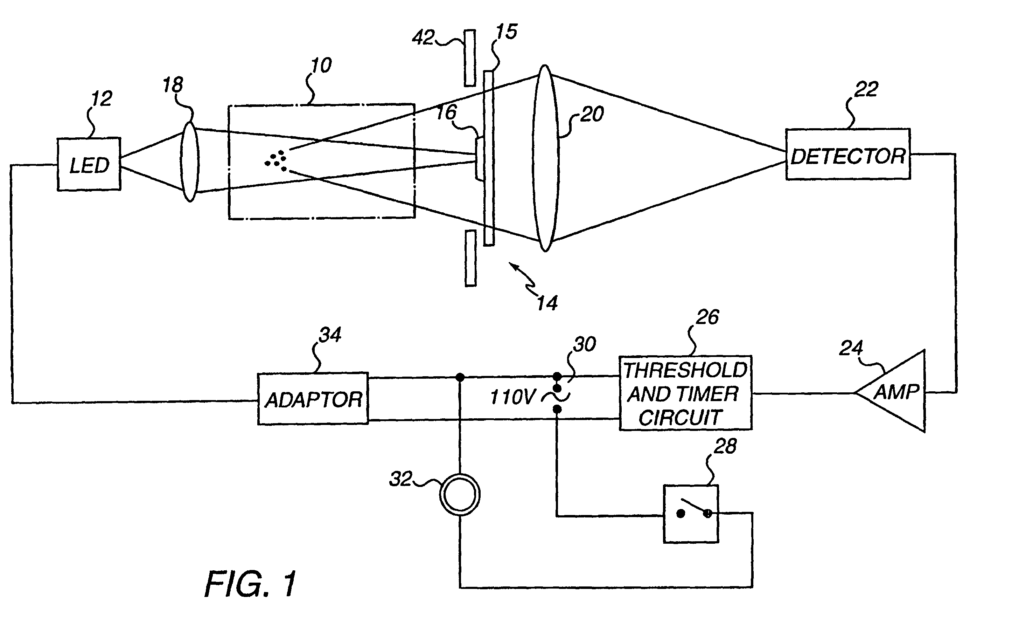

Figure 1 of the drawings illustrates an allergen particle detector apparatus according to a first embodiment of the present invention. The apparatus will be enclosed in a suitable outer housing shaped to provide a passageway or air gap 10 for exposure to environmental air in order to test an air sample for allergen-size particles, as in our US-A-6 087 947. A laser beam is directed from laser diode or LED 12 across the air sample 10 towards a beam blocking device 14 on the opposite side of the air gap. The device 14 comprises a transparent circular flat glass plate 15 with an opaque portion or disc 16 at the center of the plate. Portion 16 may be produced by black paint, or a black plastic or metal insert at the center of the plate. A focusing lens 18 in front of LED 12 is arranged to focus the laser output beam onto the beam blocking disc 16. The actual dimensions of the opaque blocking portion will be dependent on the cross-sectional shape and dimensions of the focused output beam of laser diode 12, and the particle size range to be detected by the apparatus. The LED may emit infrared light (0.8-1.0 µm (micron)) or visible light. In one embodiment of the invention an LED emitting at the wavelength of 670 nm. was used.

The majority of allergen particles to which individuals may be sensitive are in the size range of 5 to 50 µm (microns), although a small quantity of allergen particles may be found at sizes from 0.5 to 5 µm (microns) and from 50 to 500 µm (microns). Thus, substantially all allergen particles will be found in the size range of 0.5 to 500 µm (microns), with the maximum number being in the range of 5 to 50 µm (microns). Therefore, the apparatus is designed to detect particles in the range of 5 to 50 µm (microns), since the majority of allergens will be in this size range.

The angle at which light is scattered by a particle will be dependent on the wavelength of the light and the size of the particle. Airborne particles of different sizes have quite different light scattering properties. Larger particles will scatter light at smaller angles. For a red to infrared light source in the wavelength range of 0.6 to 1.0 µm (micron), the smallest scattering angle for a particle size range of 0.5 to 50 µm (microns) is about 4° to 5° (see *Electromagnetic Scattering*, R.L. Rowell and R.S. Stein, ed., p. 140, Gordon and Breach 1965). If the blocking device is at a distance of L from the air sample, the radius of the central blocking portion should be L * tan (5°), in order to block light scattered at angles less than 5°, i.e. light scattered by particles larger than 50 µm (microns). The blocking device can therefore be arranged to block all light scattered by particles of *size* greater than 50 µm (microns).

Lens 20 is positioned behind blocking device 14 in order to focus light transmitted by the device 14 onto a detector 22. The output of detector 22 is connected via amplifier 24 to a threshold and timer circuit 26. If the output of detector 22 is bove a predetermined threshold, relay switch 28 is closed to connect power supply 30 to the air filter 32, which may be any suitable HEPA (RTM) filter. The power supply is also connected via adapter 34 to the laser diode.

The beam blocking device 14 also includes an annular ring 42 of light blocking material placed in front of disc 15. Alternatively, the disc itself may be painted black around a corresponding annular area. An annular ring through which light will be transmitted is defined between beam blocking disc 16 and annular ring 42. The light transmitting annular ring will have a predetermined inner diameter d1 corresponding to the diameter of the center disc 16, and a predetermined outer diameter d2 corresponding to the inner diameter of ring 42. The dimensions d1 and d2 will be determined based on the particle size range to be detected which is 5-50 µm according to the present invention. The majority of allergen particles are in the size range of 5 to 50 µm (microns). These will scatter light in the range of around 5° to 8°, as described above in connection with the first embodiment. The diameter d1 is therefore determined from the relationship L * tan(50). The diameter d2 is determined from L * tan 8°), where L is the distance of the discriminator 118 from the sensitive region or air sample. With these dimensions, the device 118 will transmit only light scattered in the range of 5° to 8° by particles in the range from 5 to 50 µm (microns).

The use of the focusing lens 18 in conjunction with blocking disc **16** allows a simple and inexpensive laser light emitting diode or LED 12 to be used as the light source, instead of other, more expensive types of laser emitters. The focusing lens avoids the need to use a complex collimating arrangement for collimating the diffuse output beam of LED 12.

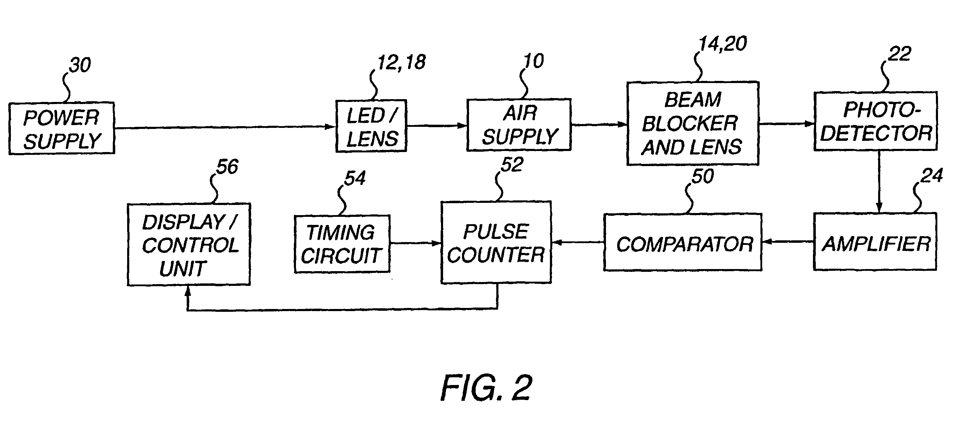

Figure 2 illustrates a modified output circuit for the allergen detector system, which provides, greater sensitivity in situations where the actual number of allergens present in the air is low. Apart from the modified output circuit, the detector apparatus is otherwise identical to that of Figure 1, and like reference numerals are used for like parts as appropriate.

The sample area or air gap 10 is of relatively small volume, of the order of a few cubic centimeters. When the allergen density in the air is low, allergen particles will pass through the sensitive region of the allergen detector apparatus only intermittently. Thus, the detector will register counts only in a discrete manner. In the circuit as illustrated in Figure 2, signal pulses from detector 22 are connected to amplifier 24. The amplified pulse output is connected to comparator 50 to make a regulated pulse. The pulse output of comparator 50 is counted by pulse counter 52. A timing circuit 54 resets the pulse counter at predetermined intervals, for example every 30 seconds. Whenever there is an allergen particle in air gap 10, the scattered light will trigger the photodetector and subsequently the amplifier and comparator will produce an output pulse. This pulse represents detection of a single allergen particle.

The pulse counter 52 registers all pulses in a certain period of time, determined by timing circuit 54. The total number of pulses registered is displayed on light emitting diode display unit 56. After each measurement period, say 30 seconds, the counter is reset to zero counts and begins to accumulate counts again. The counter trigger level is preferably adjustable by the user, so that different sensitivity levels can be detected as desired by the user.

This arrangement permits measurement of allergen density in a low range, and is particularly useful with a stand-alone allergen detector unit, where no additional air moving apparatus is used. With such an arrangement, allergen particles will drift randomly into the air gap, and there may be periods during which no allergen particles are detected when the allergen density in the air is low. By accumulating particle counts over an extended period of time, lower allergen particle density levels may be detected. Any standard, off-the-shelf pulse counter may be used, such as a 7492 counter.

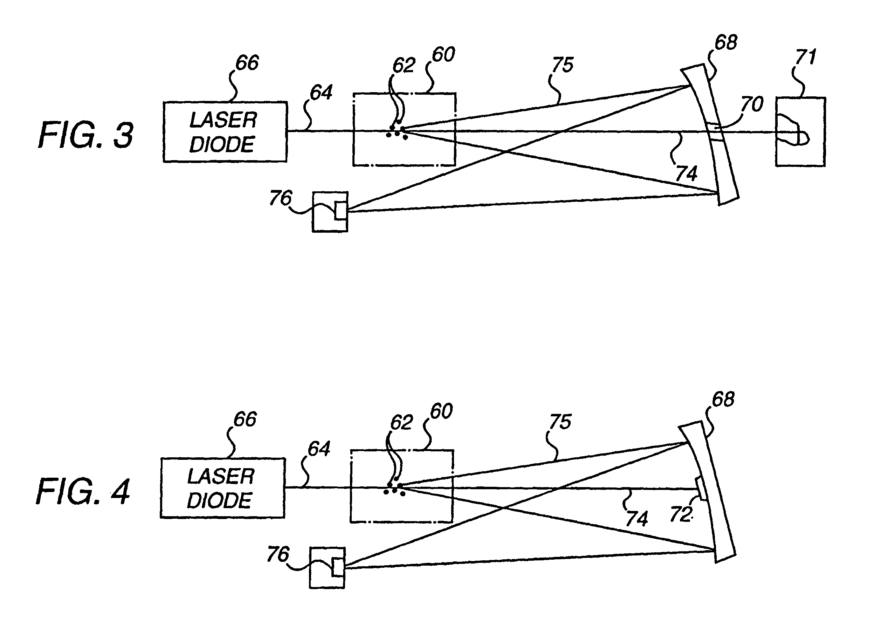

Figure 3 of the drawings illustrates a modified allergen detector apparatus according to a second embodiment of the invention. As before, the apparatus will be enclosed in a suitable housing (not illustrated) shaped to provide a passageway or air gap 60 for exposure to environmental air, in order to test an air sample within air gap 60 to detect the presence of allergen-size particles 62, as described in US-A-6 087 947 referred to above.

A laser beam 64 is directed from laser diode 66 through the air sample in gap 60. A reflecting concave mirror 68 with a central opening 70 of predetermined dimensions is positioned on the opposite side of air gap 60. A lens 18 (not illustrated) may be positioned between diode 66 and air gap 60 as in the previous embodiment in order to focus the laser output beam onto central opening 70 in the concave mirror, which acts in the same way as the beam blocking disc of the previous embodiment. The actual dimensions of the central opening 70 will be dependent on the cross-sectional shape and dimensions of the focused laser beam and the particle size range to be detected by the apparatus, as in the previous embodiment.

Figure 4 illustrates a modification which is similar to the embodiment of Figure 3 with the exception that the central opening 70 in concave mirror 68 is replaced by a black beam blocker 72 which may be provided by black paint or a black disc applied to the mirror. All other parts of the embodiment of Figure 4 are identical to that of Figure 3, and like reference numerals have been used for like parts, as appropriate.

In both Figure 3 and Figure 4, the unscattered light beam 74 is eliminated, either by leaking through the central opening 70 in the mirror in Figure 3 to a beam dump 71, or by blocking it with beam blocker 72 at the center of the mirror, as in Figure 4. In both cases, allergen particles in the air gap 60 will scatter the light beam, and the scattered light beam 75 will be reflected from the mirror 68 onto a photodetector 76 placed alongside the laser diode. The size of the central opening or beam blocker is preferably sufficient to block or receive unscattered portions of the light beam and portions scattered at angles below a predetermined minimum angle as described above in connection with the preceding embodiments, while the outer diameter of the mirror is selected such that light scattered above a predetermined maximum angle passes the mirror without reflection. Thus, only light scattered in the desired angular range corresponding to allergen-size particles (5-50 µm) will be redirected along the light path to the detector 76.

Operation of the apparatus of Figures 3 and 4 is otherwise identical to that of the first embodiment as described above in connection with Figures 1 and 2, and similar output circuitry will be provided for measuring the output of detector 76. However, this embodiment has the advantage that the apparatus will be more compact, since the light path is doubled back, shortening the overall length of the apparatus.

The allergen particle detector of this invention detects only allergen-size particles and eliminates light scattered by particles of sizes outside the allergen size range of 5 to 50 microns (5 x 10⁻⁶ m to 50 x 10⁻⁶ m) . The light source is a simple and inexpensive laser light emitting diode, used with a focusing lens to focus the unscattered beam onto a beam blocking disc. The allergen detection level may be readily adjusted by the user. The apparatus is easy and inexpensive to manufacture, and simple to operate. It provides real time, accurate detection of excessive levels of allergen particles in the air, providing a warning to sensitive individuals who may need medication and also allowing allergen filtering equipment to be activated under such conditions to clean the air.

Although preferred embodiments of the present invention have been described above by way of example only, it will be understood by those skilled in the field that modifications may be made to the disclosed embodiments without departing from the scope of the invention, which is defined by the appended claims.

## Claims

1. An apparatus for detecting the presence of particles in environmental air, comprising:
a light source for directing a light beam in a light path through a sample of environnemental air, whereby portions of the light beam will be scattered by any particles present in the air;
a beam blocking device in the light path for blocking at least unscattered portions of the light beam;
a focusing lens positioned between the light source and air sample for focusing the light beam onto the central potion of beam blocking device; and
a detector positioned to detect light transmitted by said beam blocking device and producing an output proportional to the amount of light received at the detector;
**characterized in that** the beam blocking device (16,42) has a transmitting portion for transmitting light scattered within a predetermined angular range and a blocking portion for blocking all light outside the predetermined angular range, the predetermined angular range corresponding to a predetermined allergen particle size range of 5 to 50 microns (5 x 10⁻⁶m to 50 x 10⁻⁶m).

2. The apparatus as claimed in claim 1, **characterized in that** said light source (12) has a central optical axis and the blocking device includes a circular beam blocking member (16) of predetermined diameter centered on said optical axis, said beam blocking member being opaque to light of the wavelength transmitted by said light source, and said predetermined diameter being greater than the diameter of the light beam focused onto said beam blocking member by said lens (18), said diameter being sufficient for said beam blocking member to block light scattered by particles larger than a predetermined maximum allergen particle size of 50 µm.

3. The apparatus as claimed in claim 2, charactered in that said beam blocking member has a diameter sufficient to block light scattered at angles below 4°.

4. The apparatus as claimed in claim 2, **characterized in that** the light blocking device has an annular ring (42) of light blocking material centered on said optical axis and surrounding said circular beam blocking member (16) and light transmitting portion, the annular ring having a predetermined inner diameter greater than the diameter of said circular member for blocking light scattered at angles greater than a predetermined maximum scattering angle corresponding to particles having a size less than a predetermined minimum allergen particle size of 5µm.

5. The apparatus as claimed in claim 1, **characterized in that** the light source is a light emitting diode.

6. The apparatus as claimed in claim 1, **characterized in that** a control circuit (24,26) is connected to the output of the detector for generating an alarm output signal if the detector output is above a predetermined level.

7. The apparatus as claimed in claim 6, **characterized in that** the control circuit includes a pulse counter (52) for counting the number of detector output pulses in a predetermined time interval, and producing said alarm output signal if the number of pulses is above a predetermined level.

8. The apparatus as claimed in claim 7, **characterized in that** said predetermined level is adjustable.

9. The apparatus as claimed in claim 7, **characterized in that** an alarm indicating device (56) is connected to said pulse counter having an alarm condition indicator which is actuated by said alarm output signal.

10. An apparatus for detecting the presence of particles in environmental air, comprising:
a light source for directing a light beam in a light path through a sample of environmental air, whereby portions of the light beam will be scattered by any particles present in the air;
a beam separating device in the light path for separating a first portion of the light beam corresponding to at least unscattered portions of the light beam from a second portion of the light beam which has been scattered by particles in the air sample;
a focusing lens positioned between the light source and air sample for focusing the light beam onto the central portion of the beam separating device; and
a detector positioned to detect the second portion of the light beam received from said beam separating device and producing an output proportional to the amount of light received at the detector;
**characterized in that** the beam separating device comprises a concave mirror (68) having a first, annular reflecting portion of predetermined dimensions for reflecting light scattered within a predetermined angular range onto the detector, the predetermined angular range corresponding to a predetermined allergen size range of 5 to 50 microns (5 x 10⁻⁶ m to 50 x 10⁻⁶ m), and a central, non-reflecting portion (70,72) for preventing unscattered light and light scattered by particles larger than 50 microns (50 x 10⁻⁶ m) from reaching the detector, light scattered corresponding to a predetermined allergen size less than 5 microns (5 x 10⁻⁶ m) passing the mirror without reflection.

11. The apparatus as claimed in claim 10, **characterized in that** the central, non-reflecting portion comprises a central opening (70) in the mirror.

12. The apparatus as claimed in claim 10,**characterized in that** the central, non-reflecting portion comprises a central blocking portion (72) for absorbing light.

13. A method of detecting particles in the air, comprising the steps of :
using an apparatus as defined in claims 1 or 10,
directing the light beam through a sample of environmental air.

14. The method as claimed in claim 13, comprising producing an output pulse for each allergen particle detected, and producing an output alarm signal by counting the number of output pulses within a selected time period, and producing said output alarm signal if said number is above a predetermined level.

15. The method as claimed in claim 14, including the step of activating an air filtering unit if said number of allergen particles is above said predetermined level.

## Patentansprüche

1. Vorrichtung zum Erkennen der Anwesenheit von Partikeln in Umgebungsluft, umfassend:
eine Lichtquelle für das Richten eines Lichtstrahls in einem Strahlengang durch eine Probe von Umgebungsluft, wodurch Anteile des Lichtstrahls durch etwaige in der Luft vorhandene Partikel gestreut werden;
eine strahlenunterbrechende Einrichtung in dem Strahlengang zum Unterbrechen der mindestens ungestreuten Anteile des Lichtstrahls;
eine Sammellinse, die zwischen der Lichtquelle und der Luftprobe zum Fokussieren des Lichtstrahls auf den zentralen Abschnitt der strahlenunterbrechenden Einrichtung positioniert wird; und
einen Detektor, der positioniert wird, um das von der strahlenunterbrechenden Einrichtung gesendete Licht zu erkennen und ein Ausgangssignals zu erzeugen, das der Menge des Lichts proportional ist, das am Detektor empfangen wird;
**dadurch gekennzeichnet, daß** die strahlenunterbrechende Einrichtung (16, 42) einen Sendeabschnitt für das Senden des Lichts, das innerhalb eines vorgegebenen Winkelbereichs gestreut wird, und einen unterbrechenden Abschnitt für das Unterbrechen des gesamten Lichts außerhalb des vorgegebenen Winkelbereichs aufweist, wobei der vorgegebene Winkelbereich einem vorgegebenen Größenbereich allergener Partikel von 5 bis 50 Mikrometer (5 x 10⁻⁶ m bis 50 x 10⁻⁶ m) entspricht.

2. Vorrichtung nach Anspruch 1, **dadurch gekennzeichnet, daß** die Lichtquelle (12) eine zentrale optische Achse aufweist und die unterbrechende Einrichtung ein kreisförmiges strahlenunterbrechendes Element (16) mit vorgegebenem Durchmesser enthält, das auf der optischen Achse zentriert wird, wobei das strahlenunterbrechende Element undurchsichtig für das Licht der Wellenlänge ist, das von der Lichtquelle gesendet wurde, und wobei der vorgegebene Durchmesser größer als der Durchmesser des Lichtstrahls ist, der auf das strahlenunterbrechende Element durch die Linse (18) fokussiert wird, wobei der Durchmesser für das strahlenunterbrechende Element ausreichend ist, um das Licht zu unterbrechen, das durch Partikel gestreut wird, die größer als eine vorgegebene maximale Größe allergener Partikel von 50 µm sind.

3. Vorrichtung nach Anspruch 2, **dadurch gekennzeichnet, daß** das strahlenunterbrechende Element einen Durchmesser aufweist, der ausreichend ist, um das Licht zu unterbrechen, das bei Winkeln unter 4° gestreut wird.

4. Vorrichtung nach Anspruch 2, **dadurch gekennzeichnet, daß** die lichtunterbrechende Einrichtung einen ringförmigen Ring (42) aus lichtunterbrechendem Material aufweist, der auf die optische Achse zentriert ist und das kreisförmige strahlenunterbrechende Element (16) und den Licht sendenden Abschnitt umgibt, wobei der ringförmige Ring einen vorgegebenen Innendurchmesser aufweist, der größer als der Durchmesser des kreisförmigen Elements für das Unterbrechen des Lichts ist, das bei Winkeln gestreut wird, die größer als ein vorgegebener maximaler Streuwinkel sind, der Partikeln entspricht, die eine Größe kleiner als eine vorgegebene minimale Größe allergener Partikel von 5 µm aufweisen.

5. Vorrichtung nach Anspruch 1, **dadurch gekennzeichnet, daß** die Lichtquelle eine lichtemittierende Diode ist.

6. Vorrichtung nach Anspruch 1, **dadurch gekennzeichnet, daß** eine Steuerschaltung (24, 26) an den Ausgang des Detektors zum Generieren eines Alarmausgangssignals angeschlossen wird, wenn der Detektorausgang über einem vorgegebenen Niveau ist.

7. Vorrichtung nach Anspruch 6, **dadurch gekennzeichnet, daß** die Steuerschaltung einen Impulszähler (52) für das Zählen der Anzahl der Detektorausgangsimpulse in einem vorgegebenen Zeitintervall enthält und ein Alarmausgangssignal erzeugt, wenn die Anzahl der Impulse über einem vorgegebenen Niveau liegt.

8. Vorrichtung nach Anspruch 7, **dadurch gekennzeichnet, daß** das vorgegebene Niveau einstellbar ist.

9. Vorrichtung nach Anspruch 7, **dadurch gekennzeichnet, daß** eine alarmanzeigende Einrichtung (56) an den Impulszähler angeschlossen wird, der eine Alarmzustandsanzeige aufweist, welche durch das Alarmausgangssignal ausgelöst wird.

10. Vorrichtung zum Erkennen der Anwesenheit von Partikeln in Umgebungsluft, umfassend:
eine Lichtquelle für das Richten eines Lichtstrahls in einem Strahlengang durch eine Probe von Umgebungsluft, wodurch Anteile des Lichtstrahls durch etwaige in der Luft vorhandene Partikel gestreut werden;
eine strahlentrennende Einrichtung in dem Strahlengang zum Trennen eines ersten Anteils des Lichtstrahls, der mindestens ungestreuten Anteilen des Lichtstrahls von einem zweiten Anteil des Lichtstrahls entspricht, welcher durch Teilchen in der Luftprobe gestreut wurde;
eine Sammellinse, die zwischen der Lichtquelle und der Luftprobe zum Fokussieren des Lichtstrahls auf den zentralen Abschnitt der strahlentrennenden Einrichtung positioniert wird; und
einen Detektor, der positioniert wird, um den zweiten Anteil des Lichtstrahls zu erkennen, der von der strahlentrennenden Einrichtung empfangen wird und ein Ausgangssignal erzeugt, das der Menge des an dem Detektor empfangenen Lichts proportional ist;
**dadurch gekennzeichnet, daß** die strahlentrennende Einrichtung einen Konkavspiegel (68) umfaßt, der einen ersten ringförmigen reflektierenden Abschnitt vorgegebener Abmessungen zum Reflektieren des Lichts, das innerhalb eines vorgegebenen Winkelbereichs auf den Detektor gestreut wird, wobei der vorgegebene Winkelbereich einem vorgegebenen allergenen Größenbereich von 5 bis 50 Mikrometer (5 x 10⁻⁶ m bis 50 x 10⁻⁶m) entspricht, und einen zentralen, nichtreflektierenden Abschnitt (70, 72) aufweist, um zu verhindern, daß ungestreutes Licht und Licht, das durch Partikel größer als 50 Mikrometer (50 x 10⁻⁶ m) gestreut wird, den Detektor erreicht, wobei das gestreute Licht einer vorgegebenen allergenen Größe kleiner als 5 Mikrometer (5 x 10⁻⁶ m) entspricht, das ohne Reflexion durch den Spiegel geht.

11. Vorrichtung nach Anspruch 10, **dadurch gekennzeichnet, daß** der zentrale nichtreflektierende Abschnitt eine zentrale Öffnung (70) in dem Spiegel umfaßt

12. Vorrichtung nach Anspruch 10, **dadurch gekennzeichnet, daß** der zentrale nichtreflektierende Abschnitt einen zentralen unterbrechenden Abschnitt (72) zum Absorbieren von Licht umfaßt.

13. Verfahren zum Erkennen von Partikeln in Luft unter Verwendung einer Vorrichtung, wie in Anspruch 1 oder 10 definiert, umfassend den Schritt des Richtens des Lichtstrahls durch eine Probe der Umgebungsluft.

14. Verfahren nach Anspruch 13, umfassend das Erzeugen eines Ausgangsimpulses für jedes erkannte allergene Partikel, und das Erzeugen eines Ausgangsalarmsignals durch Zählen der Anzahl der Ausgangsimpulse innerhalb einer ausgewählten Zeitperiode und das Erzeugen eines Ausgangsalarmsignals, wenn die Anzahl über einem vorbestimmten Pegel ist.

15. Verfahren nach Anspruch 14, enthaltend den Schritt des Einschaltens einer Lufttiltereinheit, wenn die Anzahl von allergenen Partikeln über dem vorbestimmten Pegel ist.

## Revendications

1. Appareil de détection de la présence de particules dans de l'air atmosphérique, comprenant :
une source de lumière destinée à diriger un faisceau lumineux suivant un trajet de lumière passant dans un échantillon d'air atmosphérique, des parties du faisceau lumineux étant diffusées par les particules éventuellement présentes dans l'air,
un dispositif d'arrêt de faisceau placé sur le trajet de la lumière destiné à arrêter au moins les parties non diffusées du faisceau lumineux,
une lentille de focalisation placée entre la source de lumière et l'échantillon d'air et destinée à focaliser le faisceau de lumière sur la partie centrale du dispositif d'arrêt du faisceau, et
un détecteur disposé afin qu'il détecte la lumière transmise par le dispositif d'arrêt du faisceau et qu'il produise un signal de sortie proportionnel à la quantité de lumière reçue par le détecteur,
**caractérisé en ce que** le dispositif d'arrêt de lumière (16, 42) possède une partie de transmission de la lumière diffusée dans une plage angulaire prédéterminée, et une partie d'arrêt de toute la lumière qui est en dehors de la plage angulaire prédéterminée, la plage angulaire prédéterminée correspondant à une plage prédéterminée de dimension des particules allergéniques de 5 à 50 µm (5.10⁻⁶ à 50.10⁻⁶ m).

2. Appareil selon la revendication 1, **caractérisé en ce que** la source de lumière (12) a un axe optique central, et le dispositif d'arrêt comprend un organe circulaire (16) d'arrêt du faisceau de diamètre prédéterminé, centré sur l'axe optique, l'organe d'arrêt du faisceau étant opaque à la lumière à la longueur d'onde transmise par la source de lumière, et le diamètre prédéterminé étant supérieur au diamètre du faisceau de lumière focalisé sur l'organe d'arrêt de faisceau par la lentille (18), le diamètre étant suffisant pour que l'organe d'arrêt de faisceau arrête la lumière diffusée par des particules plus grosses qu'une dimension maximale prédéterminée de particules allergéniques égale à 50 µm.

3. Appareil selon la revendication 2, **caractérisé en ce que** l'organe d'arrêt de faisceau a un diamètre suffisant pour arrêter la lumière diffusée à des angles inférieurs à 4°.

4. Appareil selon la revendication 2, **caractérisé en ce que** le dispositif d'arrêt de lumière a un anneau (42) d'un matériau d'arrêt de lumière centré sur l'axe optique et entourant l'organe circulaire (16) d'arrêt de lumière et la partie de transmission de lumière, l'anneau ayant un diamètre interne prédéterminé supérieur au diamètre de l'organe circulaire afin qu'il arrête la lumière diffusée avec des angles supérieurs à un angle maximal prédéterminé de diffusion correspondant à des particules dont la dimension est inférieure à une dimension minimale prédéterminée de particules allergéniques de 5 µm.

5. Appareil selon la revendication 1, **caractérisé en ce que** la source de lumière est une diode photoémissive.

6. Appareil selon la revendication 1, **caractérisé en ce qu'**un circuit de commande (24, 26) est connecté à la sortie du détecteur afin qu'il crée un signal d'alarme de sortie lorsque le signal de sortie du détecteur dépasse un niveau prédéterminé.

7. Appareil selon la revendication 6, **caractérisé en ce que** le circuit de commande comporte un compteur (52) d'impulsions destiné à compter le nombre d'impulsions de sortie du détecteur dans un intervalle de temps prédéterminé, et à compter le signal de sortie d'alarme lorsque le nombre d'impulsions dépasse un niveau prédéterminé.

8. Appareil selon la revendication 7, **caractérisé en ce que** le niveau prédéterminé est réglable.

9. Appareil selon la revendication 7, **caractérisé en ce qu'**un dispositif (56) indicateur d'alarme est connecté au compteur d'impulsions ayant un indicateur de conditions d'alarme qui est commandé par le signal de sortie d'alarme.

10. Appareil de détection de la présence de particules dans de l'air atmosphérique, comprenant :
une source de lumière destinée à diriger un faisceau de lumière suivant un trajet de lumière passant dans un échantillon d'air atmosphérique, des parties du faisceau de lumière étant diffusées par les particules éventuellement présentes dans l'air,
un dispositif séparateur de faisceau placé sur le trajet de lumière et destiné à séparer une première partie du faisceau de lumière correspondant au moins aux parties non diffusées du faisceau de lumière d'une seconde partie du faisceau de lumière qui a été diffusée par des particules de l'échantillon d'air,
une lentille de focalisation placée entre la source de lumière et l'échantillon d'air et destinée à focaliser le faisceau de lumière sur la partie centrale du dispositif de séparation de faisceau, et
un détecteur positionné afin qu'il détecte la seconde partie du faisceau de lumière reçu du dispositif de séparation de faisceau et qu'il produise un signal de sortie proportionnel à la quantité de lumière reçue par le détecteur,
**caractérisé en ce que** le dispositif de séparation de faisceau comporte un miroir concave (68) ayant une première partie annulaire réfléchissante de dimension prédéterminée destinée à réfléchir la lumière diffusée dans une plage angulaire prédéterminée sur le détecteur, la plage angulaire prédéterminée correspondant à une plage prédéterminée de dimension allergénique comprise entre 5 et 50 µm (5.10⁶ à 50.10⁻⁶ m) et une partie centrale non réfléchissante (70, 72) destinée à empêcher la lumière non diffusée et la lumière diffusée par des particules de dimension supérieure à 50 µm (50.10⁻⁶ m) d'atteindre le détecteur, la lumière diffusée correspondant à une dimension allergénique prédéterminée inférieure à 5 µm (5.10⁻⁶ m) passant au niveau du miroir sans être réfléchie.

11. Appareil selon la revendication 10, **caractérisé en ce que** la partie centrale non réfléchissante est une ouverture centrale (70) formée dans le miroir.

12. Appareil selon la revendication 10, **caractérisé en ce que** la partie centrale non réfléchissante comporte une partie centrale (72) d'arrêt destinée à absorber la lumière.

13. Procédé de détection de particules dans l'air, comprenant les étapes suivantes :
l'utilisation d'un appareil selon la revendication 1 ou 10,
la direction du faisceau lumineux dans un échantillon d'air atmosphérique.

14. Procédé selon la revendication 13, comprenant la production d'une impulsion de sortie pour chaque particule allergénique détectée, et la production d'un signal d'alarme de sortie par comptage du nombre d'impulsions de sortie pendant une période sélectionnée, et la production du signal d'alarme de sortie lorsque ce nombre dépasse un niveau prédéterminé.

15. Procédé selon la revendication 14, comprenant l'étape d'activation d'une unité de filtration d'air lorsque le nombre de particules allergéniques dépasse le niveau prédéterminé.
